Europäisches Patentamt

European Patent Office

Office européen des brevets

(19)

(11) Numéro de publication : **0 066 807 B1**

(12) **FASCICULE DE BREVET EUROPÉEN**

(45) Date de publication du fascicule du brevet :
**30.07.86**

(51) Int. Cl.⁴ : **B 23 B 51/02**

(21) Numéro de dépôt : **82104708.1**

(22) Date de dépôt : **28.05.82**

(54) **Outil de perçage.**

(30) Priorité : **04.06.81 FR 8111109**

(43) Date de publication de la demande :
**15.12.82 Bulletin 82/50**

(45) Mention de la délivrance du brevet :
**30.07.86 Bulletin 86/31**

(84) Etats contractants désignés :
**CH DE GB IT LI**

(56) Documents cités :
**CH-A-  566 183**
**DE-A- 2 050 987**
**DE-A- 2 228 122**
**GB-A-  206 761**
**GB-A-  225 900**
**GB-A- 2 028 190**
**Article, de Jules, Bertin, par sous B 1648 dans l'ouvrage "Techniques de l'Ingenieur", traité Mecanique et Chaleur**

(73) Titulaire : **ATELIER DE RECTIFICATION ET D'AFFU-TAGE A.R.A.F., Société à Responsabilité Limitée dite**
**2, rue d'Aigremont**
**F-78300 Poissy (FR)**

(72) Inventeur : **Costil, Marcel**
**2 rue Vignon**
**F-95240 Cormeilles-en-Parisis (FR)**

(74) Mandataire : **Casalonga, Axel et al**
**BUREAU D.A. CASALONGA OFFICE JOSSE & PETIT**
**Morassistrasse 8**
**D-8000 München 5 (DE)**

Jouve, 18, rue St-Denis, 75001 Paris, France

## Description

L'invention est relative au perçage de précision en construction mécanique et se rapporte à un outil de perçage du type défini dans le préambule de la revendication 1.

Avec les forets classiques à deux goujures et deux arêtes coupantes, il est pratiquement nécessaire d'utiliser un foret à centrer afin de bien positionner le trou à percer (pointage), puis après le perçage avec foret classique, d'utiliser un alésoir à arêtes coupantes multiples en chanfrein destinée à redresser éventuellement le trou, à assurer son diamètre dans les tolérances exigées et à améliorer son état de surface (notamment lorsque l'opération doit être suivie d'un taraudage précis).

Il est déjà connu, par exemple par le document GB-A-225 900, de réaliser chaque arête coupante d'un tel foret avec une partie extérieure allant du pourtour extérieur du corps de l'outil jusqu'à l'âme et avec une partie intérieure faisant un angle avec la partie extérieure et formée par une entaille ménagée dans l'âme jusqu'à la pointe, de manière que les arêtes coupantes concourent au sommet de la pointe. Ce type d'affûtage ne remédie cependant pas au mode opératoire ci-dessus des forets à deux goujures, qui constitue une servitude pesante dans les usinages sur machine automatique et notamment du type à commande numérique, en ce qu'il ne permet pas d'en obtenir le meilleur rendement désirable.

Il est également connu par exemple par le document US-A-2 404 049 de prévoir trois arêtes actives sur des outils de perçage ; cependant, il s'agit là non pas d'outils coupants, mais d'outils pénétrant par frottement dans la matière en la chauffant jusqu'à fusion. Or, on ne trouve pas sur les outils de perçage par frottement, les problèmes qui se posent pour les outils de perçage à arêtes coupantes.

La présente invention a pour objet la réalisation d'un outil de perçage permettant d'assurer à la fois les fonctions de pointage, perçage et alésage en une seule passe.

L'outil de perçage selon l'invention comprend un corps sensiblement cylindrique avec plusieurs goujures hélicoïdales laissant subsister une âme centrale et ménageant entre elles plusieurs lèvres qui sont affûtées à la pointe de l'outil pour former plusieurs arêtes coupantes suivies chacune d'une face de dépouille. Chaque arête coupante comprend une partie extérieure allant du pourtour du corps jusqu'à l'âme et une partie intérieure faisant un angle avec la partie extérieure et formée par une entaille ménagée dans l'âme jusqu'à la pointe, de manière que les arêtes coupantes concourent au sommet de la pointe. Les goujures, les lèvres et les arêtes coupantes sont au nombre de trois au moins.

On comprendra que la présence d'au moins trois arêtes coupantes concourant au sommet de la pointe permet à un tel outil de remplir l'office de pointeau et de jouir d'un bon positionnement à l'attaque simultanée du perçage, de même qu'il est mieux guidé et plus rigide qu'un foret à deux goujures et qu'on peut lui donner une âme suffisante pour permettre aux goujures d'assurer un bon dégagement de copeaux tout en étant moindre que celle des alésoirs, dont il se distingue également par sa pointe à arêtes coupantes concourantes, ce qui lui permet ainsi de remplir à lui seul les trois fonctions évoquées.

D'autres particularités préférées d'un outil de perçage selon l'invention apparaîtront d'ailleurs dans la description suivante d'une forme de réalisation d'un tel outil, représentée à titre d'exemple seulement au dessin annexé, dans lequel :

la figure 1   est une vue extérieure d'un tel outil de perçage ;

la figure 2   est une vue en coupe suivant II-II de la fig. 1 ;

la figure 3   est une vue en élévation de la pointe d'un tel outil ;

la figure 4   est une vue en perspective de dessus de la pointe de l'outil destinée à faire apparaître l'ensemble de ses arêtes coupantes.

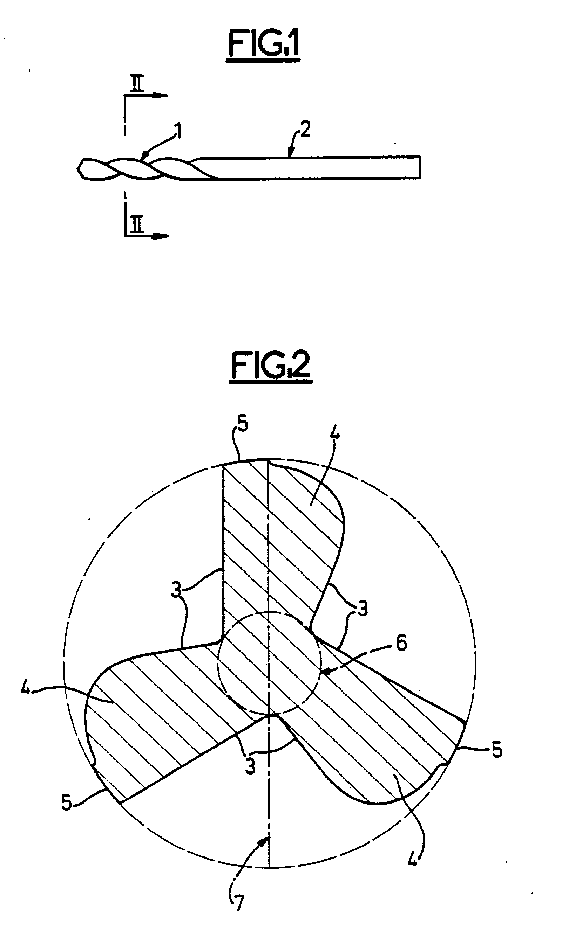

L'outil de perçage représenté comprend un corps 1 et une queue 2 pouvant être adaptée à tout mode de fixation connu, le corps étant ici formé avec trois goujures hélicoïdales 3 ménageant entre elles trois lèvres 4, qui sont diamétralement délimitées par des listels cylindriques 5 et par ailleurs conformées de manière connue en soi comme on le voit bien à la fig. 2. L'âme 6 de cet outil est choisie d'un diamètre tel par rapport au diamètre nominal 7 de l'outil que les goujures peuvent permettre l'obtention d'un bon dégagement de copeaux, ce rapport pouvant être compris entre 15 et 30 % selon la matière à percer et celle de l'outil, avec une préférence marquée entre 20 et 25 % de façon générale.

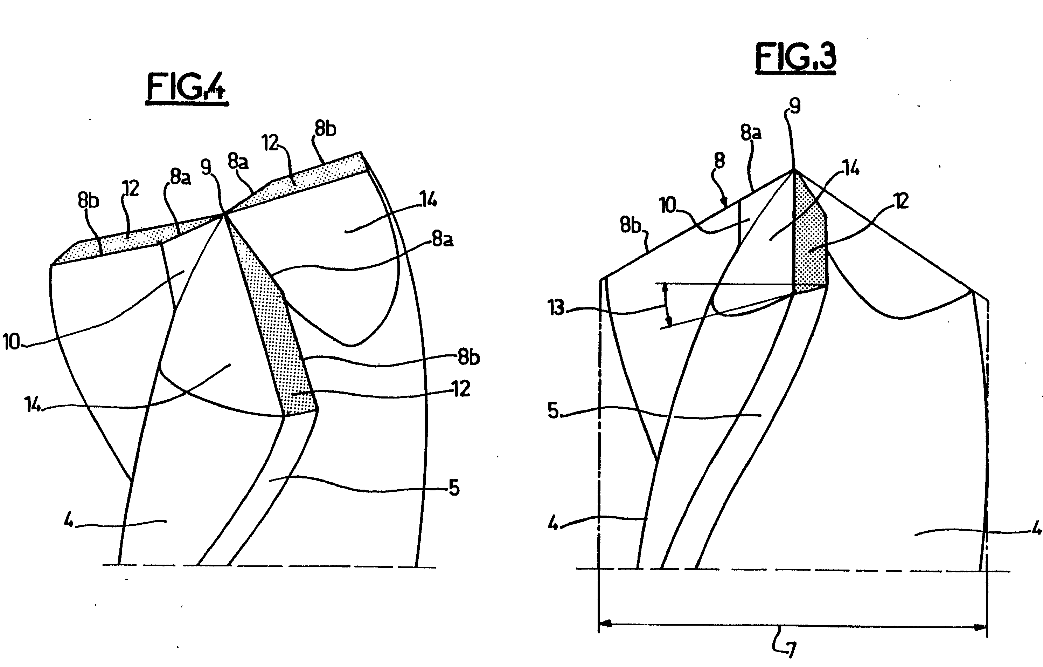

Comme illustré aux fig. 3 et 4, l'outil présente une pointe à arêtes coupantes 8 concourantes au sommet 9 de la pointe et ayant pour enveloppe le cône de pénétration choisi. Chaque arête comprend une partie centrale 8a délimitée par une entaille ménagée dans l'âme de l'outil de façon à former la face de coupe 10 de cette partie 8a de l'arête en même temps qu'une chambre à copeaux s'ouvrant sur la goujure correspondante. L'orientation de la face de coupe 10 peut être choisie pour donner lieu à un angle de coupe nul ou légèrement positif ou négatif. La partie 8b de chaque arête coupante, également délimitée sur chaque lèvre suivant le cône de pénétration choisi est suivie en arrière du sens de coupe, ainsi que la partie 8a, par une face de dépouille 12 inclinée d'un angle de dépouille 13, et dont l'arête arrière s'étend suivant un rayon de la pointe d'angle au sommet inférieur à celui des arêtes coupantes 8. Les faces de dépouille 12 peuvent être prévues planes ou de profil courbe notamment. Chaque face de dépouille est suivie d'une face de contre-dépouille 14, qui peut être formée par entaillage de l'âme et de la lèvre correspondante en même temps que la face de coupe 10, et qui contribue à ouvrir la chambre à copeaux débouchant dans la goujure correspondante.

Bien entendu diverses variantes de détail peuvent être imaginées dans l'invention comme revendiquée.

## Revendications

1. Outil de perçage comprenant un corps (1) sensiblement cylindrique avec plusieurs goujures hélicoïdales (3) laissant subsister une âme centrale (6) et ménageant entre elles plusieurs lèvres (4) qui sont affûtées à la pointe de l'outil pour former plusieurs arêtes coupantes (8) suivies chacune d'une face de dépouille (12), chaque arête coupante (8) comprenant une partie extérieure (8b) allant du pourtour extérieur du corps (1) jusqu'à l'âme (6) et une partie intérieure (8a) faisant un angle avec la partie extérieure et formée par une entaille ménagée dans l'âme jusqu'à la pointe, de manière que les arêtes coupantes (8) concourent au sommet (9) de la pointe, caractérisé par le fait que les goujures (3), les lèvres (4) et les arêtes coupantes (8) sont au nombre de trois au moins.

2. Outil de perçage selon la revendication 1, caractérisé par le fait que le diamètre de l'âme (6) du corps (1) est compris entre 15 et 30 %, de préférence entre 20 et 25 % du diamètre nominal du corps.

## Claims

1. Drilling tool comprising a substantially cylindrical body (1) with a plurality of helical flutes (3) defining a central core (6) and providing between them a plurality of lips (4) which are sharpened at the tip of the tool to form a plurality of cutting edges (8) each one of which is followed by a clearance surface (12), each cutting edge (8) comprising an exterior portion (8b) extending from the external periphery of the body (1) to the core (6) and an interior portion (8a) which makes an angle with the exterior portion and which is formed by a recess provided in the core to the tip, in such a manner that the cutting edges (8) converge at the apex (9) of the tip, characterized in that the flutes (3), the lips (4) and the cutting edges (8) are at least three in number.

2. Drilling tool according to Claim 1, characterized in that the diameter of the core (6) of the body (1) is in the range between 15 and 30 %, preferably between 20 and 25 %, of the nominal diameter of the body.

## Patentansprüche

1. Bohrwerkzeug mit einem im wesentlichen zylindrischen Körper (1) mit mehreren schraubenförmigen Spannuten (3), die einen zentralen Kern (6) stehen lassen und zwischen sich mehrere Lippen (4) bilden, die an der Spitze des Werkzeugs geschärft sind, um mehrere jeweils von einer Freifläche (12) gefolgte Schneidkanten (8) zu formen, wobei jede Schneidkante (8) einen Außenteil (8b), der vom Außenumfang des Körpers (1) bis zum Kern (6) reicht, sowie einen Innenteil (8a) umfaßt, der mit dem Aussenteil einen Winkel bildet und von einem Einschnitt im Kern bis zur Spitze gebildet wird, so daß die Schneidkanten (8) am Scheitel (9) der Spitze zusammenlaufen, dadurch gekennzeichnet, daß jeweils mindestens drei Spannuten (3), Lippen (4) und Schneidkanten (8) vorhanden sind.

2. Bohrwerkzeug gemäß Anspruch 1, dadurch gekennzeichnet, daß der Durchmesser des Kerns (6) des Körpers (1) zwischen 15 und 30 %, vorzugsweise zwischen 20 und 25 % des Nenndurchmessers des Körpers beträgt.

# FIG.1

# FIG.2

1

FIG.4

FIG.3

0 066 807